# EUROPEAN PATENT SPECIFICATION

(11) **EP 2 245 609 B1**
(45) Date of publication and mention of the grant of the patent: **27.02.2013**
(21) Application number: 09702655.3
(22) Date of filing: 07.01.2009
(51) Int. Cl.: G06F 3/048, G10L 15/26, G01C 21/36

(54) **DYNAMIC USER INTERFACE FOR AUTOMATED SPEECH RECOGNITION**
DYNAMISCHE BENUTZEROBERFLÄCHE FÜR AUTOMATISIERTE SPRACHERKENNUNG
INTERFACE UTILISATEUR DYNAMIQUE POUR RECONNAISSANCE VOCALE AUTOMATISÉE

(30) Priority: 14.01.2008 US 20942; 17.12.2008 US 337380
(43) Date of publication of application: 03.11.2010
(73) Proprietor: Garmin Switzerland GmbH, 8200 Schaffhausen (CH)
(72) Inventor: CAIRE, Jacob, W., Olathe KS 66062 (US); LUTZ, Pascal, M., Leawood KS 66224 (US); BOLTON, Kenneth, A., Olathe KS 66062 (US)
(74) Representative: UEXKÜLL & STOLBERG
(86) International application number: PCT/US2009/030259
(87) International publication number: WO 2009/091639

(56) References cited:
- EP-A1- 1 297 988
- WO-A1-03/078930
- DE-A1- 10 028 869
- JP-A- 2 224 100
- JP-A- 8 050 698
- JP-A- 2003 227 729

## Description

### BACKGROUND

A position-determining device may enable a user to determine the user's geographic position via one or more location-determining methods. Suitable location-determining methods include utilization of the global positioning system (GPS), utilization of data from cellular phone systems, and so on. To allow a user to interact with a position-determining device, the device may be configured to accept user input via a variety of input methods. Input methods may include pressing buttons on the device, selecting graphics on a device display in a touch screen mode, input from a remote control device, and so on.

A position-determining device may also be configured to accept speech (audio) input from a user. One example of a method for providing speech input to a position-determining device is the utilization of automatic speech recognition (ASR). ASR is typically employed to translate speech into text, numerical representations and so on; which may then be used to perform a desired function on the position-determining device. ASR is particularly useful in situations where it is not safe or feasible for a user to physically interact with the device, such as when the user is operating a vehicle.

While ASR may provide a simple and convenient way to interact with a position-determining device, traditional graphical user interfaces (GUIs) of such devices are configured to accept input via physical interaction by the user with the device. Thus, a traditional GUI may display commands, selectable icons, and/or fillable fields that are difficult or impossible to select using ASR. Also, due to the peculiarities of ASR, there may be certain functions of a position-determining device that are not desirable to implement via ASR. For example, an attempt to search for a street by name in Germany by providing a spoken search term to the device may provide too many search results to be useful to the user.

DE 100 28 869 A1 discloses an input menu which can be configured selectively for manual input and speech input.

### SUMMARY

Techniques are described for generating a dynamic user interface for a position-determining device that may account for a variety of input modes. In one example, a position-determining device is initiated in a first input mode (e.g., a touch screen mode) and a graphical user interface (GUI) of the device is configured to accept input via the first input mode. The position-determining device then receives an indication to switch to a second input mode (e.g., a speech input mode), and the GUI is configured to receive input via the second input mode.

This Summary is provided solely to introduce subject matter that is fully described in the Detailed Description and Drawings. Accordingly, the Summary should not be considered to describe essential features nor be used to determine scope of the claims.

### BRIEF DESCRIPTION OF THE DRAWINGS

The detailed description is described with reference to the accompanying figures. In the figures, the left-most digit(s) of a reference number identifies the figure in which the reference number first appears. The use of the same reference numbers in different instances in the description and the figures may indicate similar or identical items.

FIG. 1 is an illustration of an exemplary positioning system environment that is operable to generate a dynamic graphical user interface for a variety of input modes.

FIG. 2 is a flow diagram depicting a procedure in an exemplary implementation in which a graphical user interface is reconfigured based on a change in input modes.

FIG. 3 is a flow diagram depicting a procedure in a specific exemplary implementation in which a graphical user interface is reconfigured based on a change in input modes.

FIG. 4 is an illustration of two graphical user interfaces that may be generated to accept input via touch icons and/or speech icons.

FIG. 5 is an illustration of two graphical user interfaces that may be generated to accept input via touch bars and/or speech bars.

### DETAILED DESCRIPTION

### Overview

Traditional graphical user interfaces (GUIs) are configured for a particular mode of user input. For example, a GUI may contain graphical icons configured to be selected via a particular input mode, such as selection with a mouse and mouse pointer. However, in a different input mode, such as a speech mode, such graphical icons may be difficult or impossible to select due to difficulties in translating graphical symbols into spoken words and/or phrases that are able to be verbalized by a user and recognized by speech recognition technology.

Accordingly, techniques are described for generating a dynamic GUI that may account for a variety of user input modes. In one example embodiment, a position-determining device is initiated in a first input mode (e.g., a touch screen mode) and a GUI of the device is configured to accept input via the first input mode. The position-determining device then receives an indication to switch to a second input mode (e.g., a speech input mode), and the GUI is configured to receive input via the second input mode. In some implementations, configuring a GUI to receive input via the second input mode is not to be interpreted to imply that input may exclusively be received via the second input mode, but that the GUI is reconfigured to include certain prompts to a user that a second input mode is available on the position-determining device. Such prompts can include graphical prompts, audio prompts, and so on. Thus, in some implementations, both the first and second input modes can be active on the position-determining device, and configuring a GUI to receive input via the second input mode may then include indicating to a user that icons, text, and/or certain functionalities of the device are selectable via the second input mode.

In the following discussion, an exemplary environment is first described that is operable to generate a dynamic GUI that enables user input via a variety of different user input modes. Exemplary processes are then described which may be employed in the exemplary environment, as well as in other environments without departing from the scope thereof. Finally, examples of dynamic GUIs are described that enable user input via a variety of user input modes. Although the dynamic GUI techniques are described in relation to a position-determining environment, it should be readily apparent that these techniques may be employed in a variety of environments, such as by portable music players, wireless phones, and so on to provide portable music play functionality, traffic awareness functionality (e.g., information relating to accidents and traffic flow used to generate a route), Internet search functionality, and so on.

### Exemplary Environment

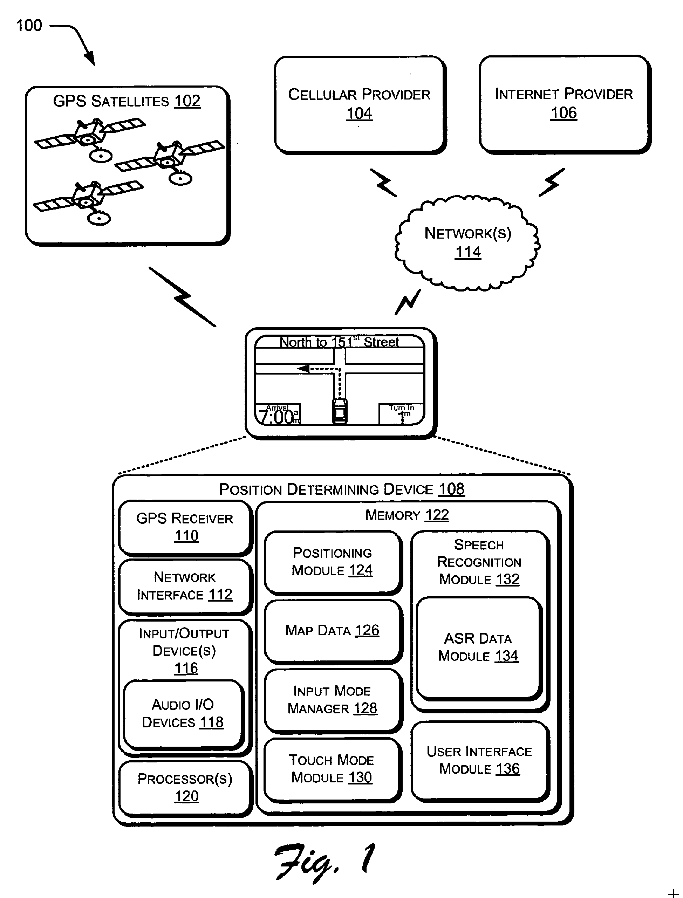

FIG. 1 illustrates an exemplary positioning system environment 100 that is operable to perform processes and techniques discussed herein. The environment 100 may include any number of position data platforms and/or position data transmitters, such as GPS satellites 102. These are presented for purposes of example only, and it should be apparent that a wide variety of other positioning systems may also be employed. In the environment 100 of FIG. 1, the GPS satellites 102 are illustrated as including one or more respective antennas. The antennas each transmit respective signals that may include positioning information and navigation signals.

The environment 100 may also includes a cellular provider 104 and an internet provider 106. The cellular provider 104 may provide cellular phone and/or data retrieval functionality to various aspects of the environment 100, and the internet provider 106 may provide network connectivity and/or data retrieval functionality to various aspects of the environment 100.

The environment 100 also includes a position-determining device 108, such as any type of mobile ground-based, marine-based and/or airborne-based receiver. The position-determining device 108 may implement various types of position-determining functionality which, for purposes of the following discussion, may relate to a variety of different navigation techniques and other techniques that may be supported by "knowing" one or more positions. For instance, position-determining functionality may be employed to provide location information, timing information, speed information, and a variety of other navigation-related data. Accordingly, the position-determining device 108 may be configured in a variety of ways to perform a wide variety of functions. For example, the positioning-determining device 108 may be configured for vehicle navigation as illustrated, aerial navigation (e.g., for airplanes, helicopters), marine navigation, personal use (e.g., as a part of fitness-related equipment), and so forth. The position-determining device 108 may include a variety of devices to determine position using one or more of the techniques previously described.

The position-determining device 108 of FIG. 1 includes a navigation receiver 110 that is configured to receive navigation signals (e.g, GPS signals, GALILEO signals, cellular network signals, Wi-Fi signals, combinations thereof, etc.) from a plurality of different navigation sources (e.g., GPS satellites 102, cellular provider 104, network(s) 114, combinations thereof, and the like). Although not expressly illustrated here, the position-determining device 108 may include one or more antennas for receiving various types of signals, such as GPS signals. The navigation receiver 110 may compute position information for the device 108, such as its location and velocity, directly using received navigation signals. In some embodiments, the navigation receiver 110 cooperates with the processor(s) 120 to compute location information for the device 108 using received navigation signals. Thus, in some embodiments the navigation receiver 110 may be integrated with one or more of the processors 120. Further, in some embodiments, the navigation receiver 110 may receive location information for the device 108 through the network(s) 114 in addition to, or as an alternative to, independently determining location information.

The position-determining device 108 may also include a network interface 112 that may enable the device to communicate with one or more networks, such as a network 114. The network 114 may include any suitable network, such as a local area network, a wide area network, the Internet, a satellite network, a cellular phone network, and so on. The position-determining device 108 also includes one or more input/output (I/O) device(s) 116 (e.g., a touch screen, buttons, wireless input device, data input, a screen, and so on). The input/output devices 116 include one or more audio I/O devices 118, such as a microphone, speakers, and so on. The various devices and modules of the position-determining device 108 are communicatively coupled to a processor 120 and a memory 122.

The processor 120 is not limited by the materials from which it is formed or the processing mechanisms employed therein, and as such, may be implemented via semiconductor(s) and/or transistors (e.g., electronic integrated circuits (ICs)), and so forth. Additionally, although a single memory 122 is shown, a wide variety of types and combinations of computer-readable storage memory may be employed, such as random access memory (RAM), hard disk memory, removable medium memory (e.g., the memory 122 may be implemented via a slot that accepts a removable memory cartridge), and other types of computer-readable media. Although the components of the position-determining device 108 are illustrated separately, it should be apparent that these components may also be further divided and/or combined without departing from the scope thereof.

The position-determining device 108 is configured to receive signals and/or data transmitted by one or more position data platforms and/or position data transmitters, such as the GPS satellites 102. These signals are provided to the processor 120 for processing by a positioning module 124, which is storable in the memory 122 and is executable on the processor 120. The positioning module 124 is representative of functionality that determines a geographic location, such as by processing the signals and/or data obtained from the position-transmitting platforms/transmitters to provide position-determining functionality, such as to determine location, speed, time, and so forth. The signals and/or data may include position-related data such as ranging signals, ephemerides, almanacs, and so on.

The positioning module 124 may be executed to use map data 126 stored in the memory 122 to generate navigation instructions (e.g., turn-by-turn instructions to an input destination), show a current position on a map, and so on. The positioning module 124 may also be executed to provide other position-determining functionality, such as to determine a current speed, calculate an arrival time, and so on. A wide variety of other examples are also contemplated.

Also stored on memory 122 is an input mode manager 128 that may enable the position determining device 108 to operate in a variety of input modes. For example, the input mode manager 128 may initiate the execution of a touch mode module 130 that enables a user to provide input to the device by physically interacting with the device. Examples of physical interaction with the device include pressing one or more buttons on the device, selecting one or more graphics and/or icons on a touch screen, pressing one or more buttons on a position-determining device remote control, and so on.

The input mode manager 128 may also initiate the execution of a speech recognition module 132, which is representative of automated speech recognition (ASR) functionality that may be employed by the position-determining device 108. The speech recognition module 132, for instance, may include functionality to convert an audio input received from a user via the audio I/O device(s) 118 (e.g., a microphone, wireless headset, and so on) into text, numerical representations and so on; which may then be used to perform a desired function on the position-determining device. A variety of techniques may be employed to translate an audio input. The speech recognition module 132 includes an ASR data module 134 that may be accessed by the speech recognition module. The ASR data module 134 stores ASR-specific data that is used in implementing the speech input functionality of the device, such as user speech profiles, user speech patterns, recognized words and/or sounds, speech context data, and so on.

The touch mode module 130 is configured to interpret a user's physical interaction with the position-determining device 108 and initiate the device functionality indicated by the physical interaction. In one example, a user selects a "street search" icon on a touch screen of the position-determining device 108, and in response, touch mode module 130 sends an indication to a user interface module 136 to generate a "street search" window for the GUI displayed on the device. The user interface module 136 is configured to generate a variety of different GUIs, such as GUIs designed for accepting physical interaction by a user with the position-determining device 108, GUIs designed to accept speech input from a user of the device, and so on. GUIs of the position-determining device 108 may also be configured to accept any combination of user input modes in a single GUI, such as a combination of physical interaction with the device and speech input to the device.

The position-determining device 108 may also implement cellular phone functionality, such as by connecting to a cellular network provided by the cellular provider 104. Network connectivity (e.g., Internet access) may also be provided to the position-determining device 108 via the Internet provider 106. Using the Internet provider 106, the position-determining device 108 can retrieve maps, driving directions, system updates, and so on.

Generally, any of the functions described herein may be implemented using software, firmware, hardware (e.g., fixed logic circuitry), manual processing, or a combination of these implementations. The terms "module" and "functionality" as used herein generally represent software, firmware, hardware or a combination thereof. In the case of a software implementation, for instance, the module represents executable instructions that perform specified tasks when executed on a processor, such as the processor 120 of the position-determining device 108 of FIG. 1. The program code may be stored in one or more computer readable media, an example of which is the memory 122 of the position-determining device 108 of FIG. 1. The features of the dynamic user interface generation for ASR techniques described below are platform-independent, meaning that the techniques may be implemented on a variety of commercial computing platforms having a variety of processors.

### Example Procedures

The following discussion describes dynamic GUI configuration and generation techniques that may be implemented utilizing the previously described systems and devices. Aspects of each of the procedures may be implemented in hardware, firmware, software or a combination thereof. The procedures are shown as a set of blocks that specify operations performed by one or more devices and are not necessarily limited to the orders shown for performing the operations by the respective blocks. In portions of the following discussion, reference will be made to the environment 100 of FIG. 1 and/or other example embodiments.

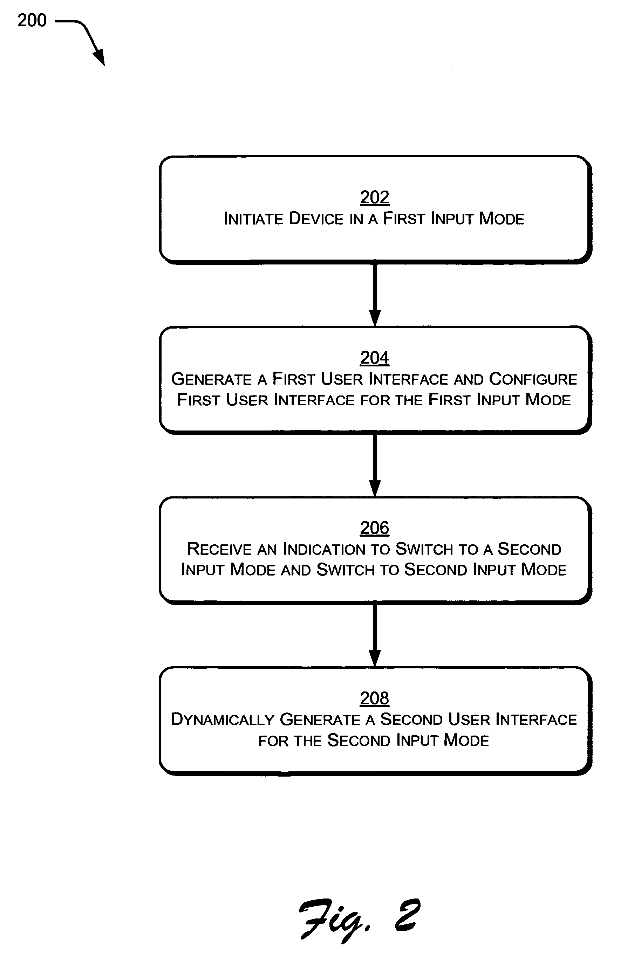

FIG. 2 illustrates a process 200 that is one example of a process that may provide one or more dynamic GUIs for a position-determining device. The position-determining device is initiated in a first input mode (block 202). In some implementations, initiating the position-determining device may be accomplished in response to a number of different occurrences, such as in response to powering-on the device via user selection of a button on the device, spoken input by a user, powering on of a vehicle that hosts the device (in vehicle scenarios), and so on.

A GUI is generated on the position-determining device and is configured for the first input mode (block 204). In one example, the first input mode involves the physical interaction of a user with the position-determining device. For example, in a touch screen mode, the GUI is configured to receive user input to the position-determining device via the selection of graphical icons and/or fields displayed on a touch screen of the position-determining device. One or more of the graphical icons and/or fields displayed on the GUI may be associated with location-related information and a graphical icon and/or field may be selectable to retrieve further information about an associated location. Other examples of physical interaction with a position-determining device are given above. These examples are not intended to be limiting, and it is contemplated that any suitable way of providing user input to the position-determining device may be utilized.

An indication to switch to a second input mode is received on the position-determining device and the device switches to the second input mode (block 206). The indication may be received in response to a number of different occurrences. In one example, the indication is received in response to a user's physical interaction with the position-determining device, such as pressing one or more buttons on the device and/or a device remote control. The indication may also be received in response to spoken input by the user provided to the device via an audio input device (e.g., a microphone). In one example, the second input mode is an audio input mode, such as an ASR mode.

When the position-determining device switches to the second input mode, the GUI of the device is configured for the second input mode (block 208). Configuring the GUI for the second input mode may include dynamically generating a new GUI for the position-determining device and/or reconfiguring the previous GUI to accept input via the second input mode. Continuing the example from block 206, in scenarios where the second input mode is an ASR mode, the GUI is configured to receive input via speech input from a user. Configuring the GUI for user speech input may include graphical prompts (e.g., speech icons) displayed to a user that indicate particular words or phrases that, if provided as speech input to the position-determining device, may provide specific functionality on the device. For example, an address search icon may be presented that indicates to the user that speaking the word "address" will cause the position-determining device to present an address search window on the GUI. Other examples of GUI graphics and/or icons are presented below. Also, as discussed above and according to some example implementations, the GUI that is configured for the second input mode may still receive input via the first input mode. Configuring the GUI for the second input mode may include displaying certain graphical indications (e.g., icons, text, and so on) that indicate the selectability of the graphical indication(s) and/or other position-determining device functionality via the second input mode.

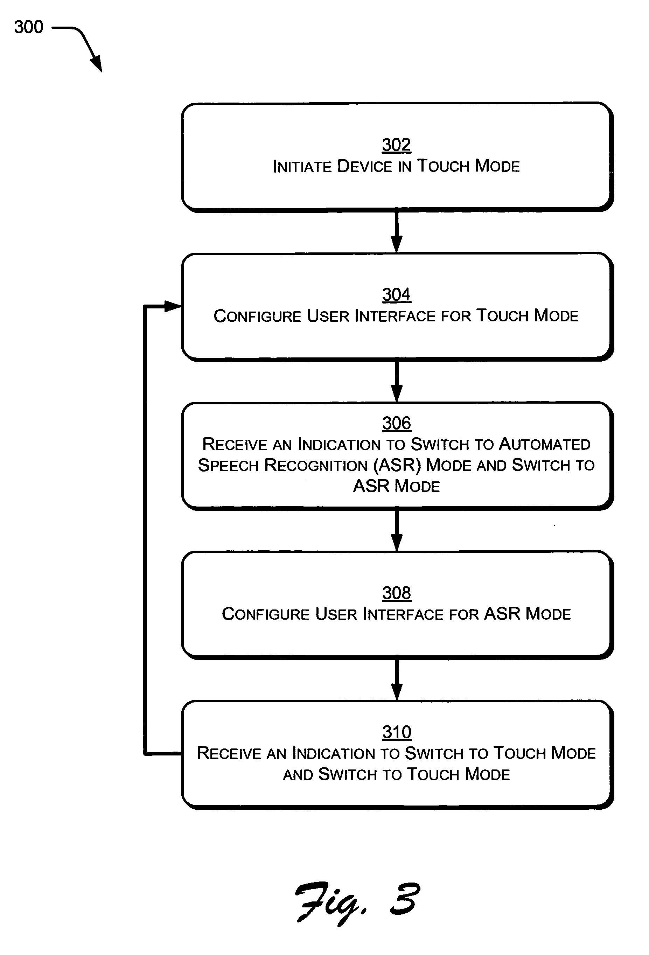

FIG. 3 depicts a process 300 according to one or more example embodiments in which a user changes input modes and the GUI reconfigures based on the change in input modes.

In this example, a position-determining device is initiated to receive input via a touch mode (block 302). The touch mode may include any suitable manner of input via physical interaction with the device, including user selection of graphical icons displayed on a touch screen GUI of the position-determining device. In response to the position-determining device being initiated in a touch mode, a GUI of the device is configured to accept user input via the touch mode (block 304). However, embodiments of the present invention may employ non-touch, non-speech, input modes that may be transitioned to the speech mode as discussed herein. For example, in some embodiments, the graphical icons may be selected using an input device such as a joystick, stylus, physical button, control, combinations thereof, and the like, without the use of a touch screen.

The position-determining device then receives an indication to switch to an ASR input mode, and the device switches to the ASR input mode (block 306). As discussed above, the indication to switch input modes may be received by the device in response to physical interaction by a user with the device or a device remote control, or in response to speech input by the user. These examples of switching input modes are presented or purposes of illustration only, and it is contemplated that any suitable fashion of input mode switching may be utilized without departing from the scope of the claimed embodiments. In one example implementation, a user of the position-determining device begins operating a vehicle and thus desires to operate the vehicle in ASR input mode. The user then provides the indication to switch to the ASR mode and begins interacting with the position-determining device via speech input.

In response to the device switching to an ASR input mode, the GUI of the device is configured to receive input via ASR (block 308). Configuring the GUI to receive input via ASR may involve a complete reconfiguration of the GUI from the touch mode GUI, or only a partial reconfiguration of the GUI.

The position-determining device receives an indication to switch to the touch mode and switches to the touch mode (block 310). The process then returns to block 304 and configures the GUI for touch mode.

### Example User Interfaces

This section presents two sets of GUIs that may be generated using the processes and techniques discussed herein. Aspects of each of the GUIs may be generated in hardware, firmware, software or a combination thereof. These GUIs are discussed with reference to the previously-discussed example processes, and are presented in the context of a switch of input modes on a position-determining device.

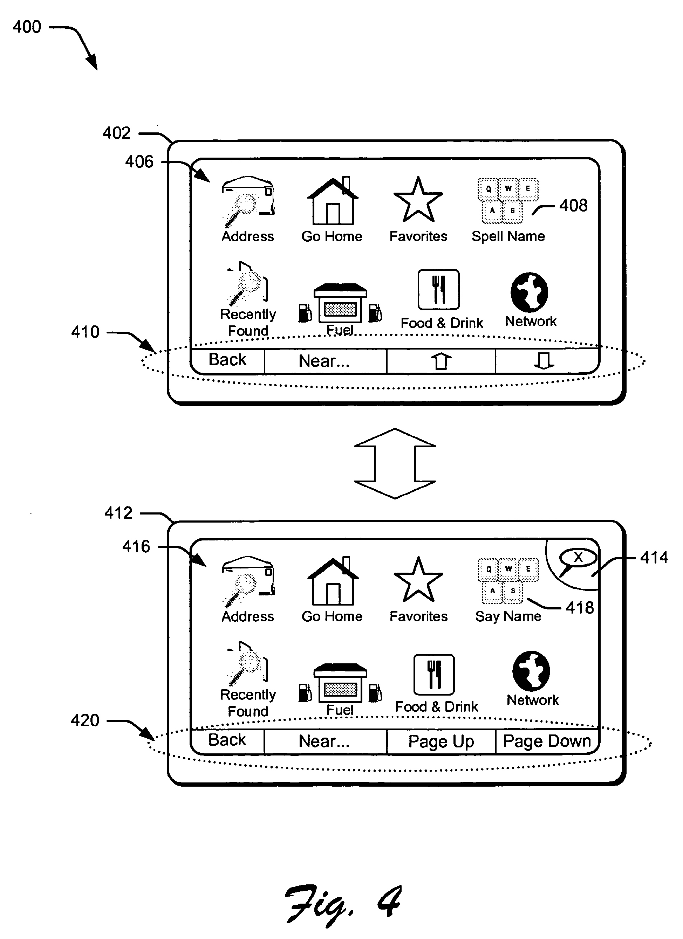

Fig. 4 illustrates at 400 two examples of GUIs that may be displayed on a position-determining device. A touch mode GUI 402 may be displayed on a device when the device is initiated (e.g., when the device is powered on). The touch mode GUI 402 includes selectable icons 406 which may be touched by a user to activate particular position-determining device functionality associated with each icon. For example, the selectable icons 406 include an "address" icon which, if selected, presents the user with an address search GUI which enables the user to conduct a search for a physical address and/or other geographic location. The selectable icons 406 also include a "spell name" icon 408 that, if selected by a user, presents a GUI that enables the user to select characters (e.g., letters and/or numbers) to spell a name as part of a location search or other position-determining device function.

The touch mode GUI also includes a navigation bar 410 that displays a variety of navigation icons for navigating through various interfaces and/or functionalities of the position-determining device. As illustrated, the navigation bar 410 includes an up arrow and a down arrow that, if selected, enable a user to vertically scroll through the GUI. The navigation bar 410 also includes a "back" icon that, if selected, enables a user to return to a previous GUI screen and/or location.

FIG. 4 also illustrates one example of a speech mode GUI 412. The speech mode GUI 412 may be displayed on a position-determining device in response to a change in input modes, such as in block 308 of process 300, illustrated above in FIG. 3. In this example, when the position-determining device GUI is configured for speech input, a speech enabled icon may be displayed on the GUI to indicate that the device is able to receive speech input. Also, one or more of the selectable icons 406 from touch mode GUI 402 are reconfigured to present one or more speech icons 416. For example, the "spell name" icon 408 is reconfigured as a "say name" speech icon 418. If the "say name" speech icon 418 is displayed on the speech mode GUI 412 and a user speaks to phrase "say name", a "say name" window may be presented to the user that enables the user to provide one more search terms and/or locations to the device by speaking the search terms and/or locations. The other icons that are displayed as part of the speech icons 416 indicate to the user that the words and/or phrases associated with the icons may be spoken by the user to select and/or activate the particular functionality associated with each icon.

The speech mode GUI 412 also includes a speech navigation bar 420 that is a partially reconfigured form of navigation bar 410. In this example, the up arrow and down arrow of navigation bar 410 have been reconfigured to display the phrases "page up" and "page down". Thus, instead of physically selecting the up arrow and/or down arrow of navigation bar 410, the user may speak the phrases "page up" and/or "page down" to navigate through the speech mode GUI 412.

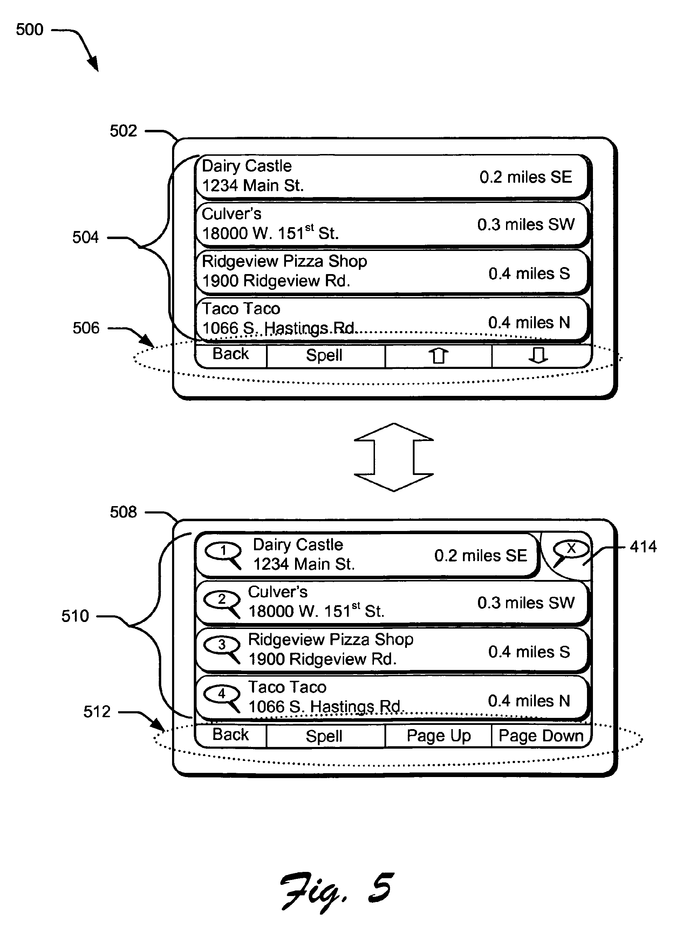

FIG. 5 illustrates at 500 a further set of GUIs that may be displayed on a position-determining device. In this example, a touch mode GUI 502 is displayed on the position-determining device when the device is in a mode to receive input via physical interaction by a user with the device and/or a device remote control. The touch mode GUI 502 includes controls, such as several touch bars 504, each of the touch bars including information about a particular location. In this example, each of the touch bars 504 includes information about a dining establishment. These are presented for purposes of example only, and touch bars may be associated with a variety of geographic locations and position-determining device functionality, such as gas stations, entertainment facilities, hospitals, and so on. In a touch input mode, a user may select a touch bar of interest by touching the area of the touch screen corresponding to the particular touch bar of interest. Selecting a touch bar of interest may cause a number of different position-determining device functionalities to be activated, such as displaying driving directions to the location associated with the selected touch bar.

FIG. 5 also includes one example of a speech mode GUI 508 that may be displayed on a position-determining device when the device is configured to accept speech input. When the device is in a speech input mode, the speech mode GUI 508 displays the speech enabled icon 414, as discussed with respect to speech mode GUI 412. The speech enabled icon 414 indicates to a user that specific icons, text, and/or position-determining device functionality are selectable via speech input.

The touch mode GUI 502 also includes a navigation bar 506 that includes a plurality of icons that, if selected, enable a user to navigate through the GUI. The icons include an up arrow and a down arrow that enable vertical scrolling through the contents of the GUI. The navigation bar 506 also includes a back icon that, if selected, enables a user to return to a previous GUI and/or functionality.

The speech mode GUI 508 also includes speech bars 510 that are configured to be selected via speech input. In some embodiments, speech bars 510 may be selected by speech input and/or touch input. Each of the speech bars 510 includes location-related information of interest to a user, such as dining establishments, gas stations, retails shops, and so on. In this example, each of the speech bars 510 also includes a bubble icon with a number inside of the bubble icon. For example, the top speech bar of the speech bars 510 includes a bubble icon with the number one inside, and so on with the remaining speech bars. The numbers inside of the bubble icons represent numbers that may be provided to the position-determining device via speech input to select the speech bar associated with the spoken number. Thus, in this example, if a user speaks the number "one" to the device, the speech bar associated with the "Dairy Castle" location would be selected. In some embodiments, each of the speech bars 510 may also be selected by speaking part or all of the text included in the speech bar. As with previous GUIs, selecting a speech bar may activate further position-determining device functionality, such as retrieving driving directions for a location associated with the speech bar.

The speech mode GUI 508 also includes a navigation bar 512 that, in some embodiments, is a reconfiguration of navigation bar 506 to allow for speech-based navigation of the speech mode GUI. For example, the up arrow and down arrow of touch mode GUI 502 have been replaced with the text "page up" and "page down". Speaking the words "page up" and "page down" may enable the user to scroll vertically through the speech mode GUI 508. Also, speaking the word "back" may activate the back functionality discussed above, and speaking the word "spell" may enable the speech mode GUI 508 to receive a spoken spelling of a search term and/or location from a user.

Accordingly, as shown in these example GUIs, switching from one input mode to another input mode may partially or completely reconfigure a GUI to better fit the particular active input mode(s). The graphics, icons, and navigation functionalities presented above are for purposes of example only, and other icons, phrases, text, and GUI navigation techniques may be utilized without departing from the scope of the claimed embodiments. In addition, the specified order of input modes is presented for illustration only, and it is contemplated that a GUI displayed on a position-determining device may be dynamically configured and reconfigured between a variety of input modes, as implied by the two-way arrows between the GUIs of FIGS. 4 and 5.

Although the invention has been described in language specific to structural features and/or methodological acts, it is to be understood that the invention defined in the appended claims is not necessarily limited to the specific features or acts described. Rather, the specific features and acts are disclosed as exemplary forms of implementing the claimed invention.

## Claims

1. A position-determining device (108) comprising:
a navigation receiver (110) operable to receive navigation signals;
a display;
an audio input device (118) operable to receive user speech; and a processor (120) coupled with the navigation receiver (110), the display, and the audio input device (118), the processor operable to
generate a first user interface (502) comprising a plurality of graphical icons, the first user interface (502) being presented on the display and graphically configured for a non-speech input mode, to perform a
transition from the non-speech input mode to a speech input mode, and
responsive to the transition, to dynamically generate a second user interface (508) for presentation on the display, the second user interface (508) being graphically configured for the speech input mode by modifying at least a portion of one of the graphical icons with a speech icon indicating a word that is to be spoken by the user to select the speech icon,
wherein the graphical icons include a plurality of controls (504, 510) associated with a listing, each of the controls including information about a particular location, and
wherein the second user interface (508) includes a plurality of speech icons, each of the controls (510) including location-related information and at least one of the speech icons
being associated with each of the controls (510) to indicate a number that is to be spoken by the user to select a particular one of the controls (510).

2. The device of claim 1, wherein at least one of the graphical icons is associated with location-related information and the speech icon is associated with location-related information.

3. The device of claim 1, wherein a first one of the graphical icons lacks text information and at least a portion of the first graphical icon is replaced with the speech icon, the speech icon including text information.

4. The device of claim 3, wherein the first graphical icon is an arrow and the text information includes the word "up" or "down".

5. The device of claim 1, wherein the graphical icon is modified by the speech icon by replacing the graphical icon with the speech icon or by appending the speech icon to the graphical icon.

6. The device of claim 1, wherein the processor is further operable to utilize the audio input device to detect that the user has spoken the word associated with the speech icon and execute functionality associated with the speech icon and/or wherein the display is a touch-screen display and the processor is further operable to utilize the display to detect that the user has selected one of the graphical icons and execute functionality associated with the selected graphical icon.

7. The device of claim 1, further including a non-audio input device operable to receive an input from the user, wherein the processor is further operable to detect that the user has selected one of the graphical icons based on the input and execute functionality associated with the selected graphical icon.

8. A method comprising:
generating (204) a first user interface (502) for a position-determining device (108), the first user interface (502) being graphically configured for a first input mode and comprising a plurality of graphical icons;
receiving (206) on the position-determining device an indication to transition from the first input mode to a speech input mode; and
responsive to the indication, dynamically generating (208) a second user interface (508) for the position-determining device, the second user interface (508) being graphically configured for the speech input mode by modifying at least a portion of
one of the graphical icons with a speech icon indicating a word that is to be spoken by a user to select the speech icon,
wherein the graphical icons include a plurality of controls (504, 510) associated with a listing, each of the controls including information about a particular location, and
wherein the second user interface (508) includes a plurality of speech icons, each of the controls (510) including location-related information and at least one of the speech icons being associated with each of the controls (510) to indicate a number that is to be spoken by the user to select a particular one of the controls (510).

9. The method of claim 8, wherein at least one of the graphical icons is associated with location-related information and the speech icon is associated with location-related information.

10. The method of claim 8, wherein a first one of the graphical icons lacks text information and at least a portion of the first graphical icon is replaced with the speech icon, the speech icon including text information.

11. The method of claim 10, wherein the first graphical icon is an arrow and the text information includes the word "up" or "down".

12. The method of claim 8, wherein the graphical icon is modified by the speech icon by replacing the graphical icon with the speech icon or by appending the speech icon to the graphical icon.

13. The method of claim 8, further including detecting that the user has spoken the word associated with the speech icon and executing functionality associated with the speech icon and/or detecting that the user has selected one of the graphical icons on a touch-screen display and executing functionality associated with the selected graphical icon.

## Patentansprüche

1. Positionsbestimmungsvorrichtung (108), die aufweist:
einen Navigationsempfänger (110), der betrieben werden kann, um Navigationssignale zu empfangen,
eine Anzeige,
eine Audioeingabevorrichtung (118), die betrieben werden kann, um Benutzersprache zu empfangen, und
einen Prozessor (120), der mit dem Navigationsempfänger (110), der Anzeige und der Audioeingabevorrichtung (118) gekoppelt ist, wobei der Prozessor betrieben werden kann, um
eine erste Benutzerschnittstelle (502) zu erzeugen, die eine Vielzahl von grafischen Symbolen aufweist, wobei die erste Benutzerschnittstelle (502) auf der Anzeige dargestellt wird und grafisch für eine Nicht-Sprach-Eingabebetriebsart ausgestaltet ist,
einen Übergang von der Nicht-Sprach-Eingabebetriebsart zu einer Sprach-Eingabebetriebsart durchzuführen und
in Reaktion auf den Übergang dynamisch eine zweite Benutzerschnittstelle (508) zur Darstellung auf der Anzeige zu erzeugen, wobei die zweite Benutzerschnittstelle (508) grafisch für die Sprach-Eingabebetriebsart ausgestaltet wird, indem zumindest ein Teil von einem der grafischen Symbole mit einem Sprachsymbol modifiziert wird, das ein Wort angibt, das durch den Benutzer zu sprechen ist, um das Sprachsymbol auszuwählen,
wobei die grafischen Symbole eine Vielzahl von Steuerelementen (504, 510) enthalten, die zu einer Auflistung gehören, wobei jedes der Steuerelemente Informationen über einen bestimmten Ort enthält, und
wobei die zweite Benutzerschnittstelle (508) eine Vielzahl von Sprachsymbolen enthält, wobei jedes der Steuerelemente (510) ortsbezogene Informationen enthält und jedem der Steuerelemente (510) zumindest eines der Sprachsymbole zugeordnet ist, um eine Zahl anzugeben, die durch den Benutzer zu sprechen ist, um ein bestimmtes der Steuerelemente (510) auszuwählen.

2. Vorrichtung nach Anspruch 1, bei der mindestens eines der grafischen Symbole mit ortsbezogenen Informationen in Zusammenhang steht und das Sprachsymbol mit ortsbezogenen Informationen in Zusammenhang steht.

3. Vorrichtung nach Anspruch 1, bei der einem ersten der grafischen Symbole Textinformation fehlt und zumindest ein Teil des ersten grafischen Symbols durch das Sprachsymbol ersetzt wird, wobei das Sprachsymbol Textinformation enthält.

4. Vorrichtung nach Anspruch 3, bei der das erste grafische Symbol ein Pfeil ist und die Textinformation das Wort "hoch" oder "runter" enthält.

5. Vorrichtung nach Anspruch 1, bei der das grafische Symbol durch das Sprachsymbol modifiziert wird, indem das grafische Symbol durch das Sprachsymbol ersetzt wird oder indem das Sprachsymbol zu dem grafischen Symbol hinzugefügt wird.

6. Vorrichtung nach Anspruch 1, bei der der Prozessor ferner betrieben werden kann, um die Audioeingabevorrichtung zu verwenden, um zu detektieren, dass der Benutzer das Wort gesprochen hat, das dem Sprachsymbol zugeordnet ist, und dem Sprachsymbol zugeordnete Funktionalität auszuführen, und/oder bei der die Anzeige ein berührungsempfindlicher Bildschirm ist und der Prozessor ferner betrieben werden kann, um die Anzeige zu verwenden, um zu detektieren, dass der Benutzer eines der grafischen Symbole ausgewählt hat, und dem ausgewählten grafischen Symbol zugeordnete Funktionalität auszuführen.

7. Vorrichtung nach Anspruch 1, die ferner eine Nicht-AudioEingabevorrichtung aufweist, die betrieben werden kann, um eine Eingabe von dem Benutzer zu erhalten, wobei der Prozessor ferner betrieben werden kann, um auf Basis der Eingabe zu detektieren, dass der Benutzer eines der grafischen Symbole ausgewählt hat, und dem ausgewählten grafischen Symbol zugeordnete Funktionalität auszuführen.

8. Verfahren, das aufweist:
Erzeugen (204) einer ersten Benutzerschnittstelle (502) für eine Positionsbestimmungsvorrichtung (108), wobei die erste Benutzerschnittstelle (502) grafisch für eine erste Eingabebetriebsart ausgestaltet ist und eine Vielzahl von grafischen Symbolen aufweist,
Empfangen (206) einer Angabe an der Positionsbestimmungsvorrichtung, von der ersten Eingabebetriebsart in eine Sprach-Eingabebetriebsart überzugehen, und
dynamisches Erzeugen (208) einer zweiten Benutzerschnittstelle (508) für die Positionsbestimmungsvorrichtung in Reaktion auf die Angabe, wobei die zweite Benutzerschnittstelle (508) grafisch für die Sprach-Eingabebetriebsart ausgestaltet wird, indem zumindest ein Teil von einem der grafischen Symbole mit einem Sprachsymbol modifiziert wird, das ein Wort angibt, das durch einen Benutzer zu sprechen ist, um das Sprachsymbol auszuwählen,
wobei die grafischen Symbole eine Vielzahl von Steuerelementen (504, 510) enthalten, die zu einer Auflistung gehören, wobei jedes der Steuerelemente Informationen über einen bestimmten Ort enthält, und
wobei die zweite Benutzerschnittstelle (508) eine Vielzahl von Sprachsymbolen enthält, wobei jedes der Steuerelemente (510) ortsbezogene Informationen enthält und jedem der Steuerelemente (510) zumindest eines der Sprachsymbole zugeordnet ist, um eine Zahl anzugeben, die durch den Benutzer zu sprechen ist, um ein bestimmtes der Steuerelemente (510) auszuwählen.

9. Verfahren nach Anspruch 8, bei dem mindestens eines der grafischen Symbole mit ortsbezogenen Informationen in Zusammenhang steht und das Sprachsymbol mit ortsbezogenen Informationen in Zusammenhang steht.

10. Verfahren nach Anspruch 8, bei dem einem ersten der grafischen Symbole Textinformation fehlt und zumindest ein Teil des ersten grafischen Symbols durch das Sprachsymbol ersetzt wird, wobei das Sprachsymbol Textinformation enthält.

11. Verfahren nach Anspruch 10, bei dem das erste grafische Symbol ein Pfeil ist und die Textinformation das Wort "hoch" oder "runter" enthält.

12. Verfahren nach Anspruch 8, bei dem das grafische Symbol durch das Sprachsymbol modifiziert wird, indem das grafische Symbol durch das Sprachsymbol ersetzt wird oder indem das Sprachsymbol zu dem grafischen Symbol hinzugefügt wird.

13. Verfahren nach Anspruch 8, das ferner aufweist, zu detektieren, dass der Benutzer das Wort gesprochen hat, das dem Sprachsymbol zugeordnet ist, und dem Sprachsymbol zugeordnete Funktionalität auszuführen und/oder zu detektieren, dass der Benutzer eines der grafischen Symbole auf einem berührungsempfindlichen Bildschirm ausgewählt hat, und dem ausgewählten grafischen Symbol zugeordnete Funktionalität auszuführen.

## Revendications

1. Dispositif de détermination de position (108) comprenant :
un récepteur de navigation (110) fonctionnel pour recevoir des signaux de navigation ;
un affichage ;
un dispositif d'entrée audio (118) fonctionnel pour recevoir la voix d'un utilisateur ; et
un processeur (120) couplé au récepteur de navigation (110), à l'affichage, et au dispositif d'entrée audio (118), le processeur étant fonctionnel pour :
générer une première interface utilisateur (502) comprenant une pluralité d'icônes graphiques, la première interface utilisateur (502) étant présentée sur l'affichage et configurée de manière graphique pour un mode d'entrée non vocale ;
exécuter une transition à partir du mode d'entrée non vocale vers un mode d'entrée vocale ; et
en réponse à la transition, générer de manière dynamique une seconde interface utilisateur (508) pour une présentation sur l'affichage, la seconde interface utilisateur (508) étant configurée de manière graphique pour le mode d'entrée vocale en modifiant une partie au moins de l'une des icônes graphiques avec une icône de voix qui indique une expression devant être énoncée par l'utilisateur afin de sélectionner l'icône de voix ;
dans lequel les icônes graphiques comprennent une pluralité de commandes (504, 510) associées à une liste, chacune des commandes comprenant des informations se rapportant à un emplacement particulier ; et
dans lequel la seconde interface utilisateur (508) comprend une pluralité d'icônes de voix, chacune des commandes (510) comprenant des informations se rapportant à un emplacement et l'une au moins des icônes de voix étant associée à chacune des commandes (510) pour indiquer un nombre devant être énoncé par l'utilisateur afin de sélectionner l'une particulière des commandes (510).

2. Dispositif selon la revendication 1, dans lequel l'une au moins des icônes graphiques est associée à des informations se rapportant à un emplacement et l'icône de voix est associée à des informations se rapportant à un emplacement.

3. Dispositif selon la revendication 1, dans lequel une première icône graphique parmi les icônes graphiques manque d'informations de texte et une partie au moins de la première icône graphique est remplacée par l'icône de voix, l'icône de voix comprenant des informations de texte.

4. Dispositif selon la revendication 3, dans lequel la première icône graphique est une flèche et les informations de texte comprennent l'expression « en haut » ou « en bas ».

5. Dispositif selon la revendication 1, dans lequel l'icône graphique est modifiée par l'icône de voix en remplaçant l'icône graphique par l'icône de voix ou en ajoutant l'icône de voix à l'icône graphique.

6. Dispositif selon la revendication 1, dans lequel le processeur est en outre fonctionnel pour utiliser le dispositif d'entrée audio afin de détecter que l'utilisateur a énoncé l'expression associée à l'icône de voix et d'exécuter la fonctionnalité associée à l'icône de voix et/ou dans lequel l'affichage est un affichage à écran tactile et le processeur est en outre fonctionnel pour utiliser l'affichage afin de détecter que l'utilisateur a sélectionné l'une des icônes graphiques et d'exécuter la fonctionnalité associée à l'icône graphique sélectionnée.

7. Dispositif selon la revendication 1, comprenant en outre un dispositif d'entrée non audio fonctionnel pour recevoir une entrée en provenance de l'utilisateur, dans lequel le processeur est en outre fonctionnel pour détecter que l'utilisateur a sélectionné l'une des icônes graphiques sur la base de l'entrée, et pour exécuter la fonctionnalité associée à l'icône graphique sélectionnée.

8. Procédé comprenant :
la génération (204) d'une première interface utilisateur (502) pour un dispositif de détermination de position (108), la première interface utilisateur (502) étant configurée de manière graphique pour un premier mode d'entrée et comprenant une pluralité d'icônes graphiques ;
la réception (206) sur le dispositif de détermination de position d'une indication pour passer du premier mode d'entrée à un mode d'entrée vocale ; et
en réponse à l'indication, la génération de manière dynamique (208) d'une seconde interface utilisateur (508) pour le dispositif de détermination de position, la seconde interface utilisateur (508) étant configurée de manière graphique pour le mode d'entrée vocale en modifiant une partie au moins de l'une des icônes graphiques avec une icône de voix qui indique une expression devant être énoncée par un utilisateur afin de sélectionner l'icône de voix ;
dans lequel les icônes graphiques comprennent une pluralité de commandes (504, 510) associées à une liste, chacune des commandes comprenant des informations se rapportant à un emplacement particulier ; et
dans lequel la seconde interface utilisateur (508) comprend une pluralité d'icônes de voix, chacune des commandes (510) comprenant des informations se rapportant à un emplacement et l'une au moins des icônes de voix étant associée à chacune des commandes (510) pour indiquer un nombre devant être énoncé par l'utilisateur afin de sélectionner l'une particulière des commandes (510).

9. Procédé selon la revendication 8, dans lequel l'une au moins des icônes graphiques est associée à des informations se rapportant à un emplacement et l'icône de voix est associée à des informations se rapportant à un emplacement.

10. Procédé selon la revendication 8, dans lequel une première icône graphique parmi les icônes graphiques manque d'informations de texte et une partie au moins de la première icône graphique est remplacée par l'icône de voix, l'icône de voix comprenant des informations de texte.

11. Procédé selon la revendication 10, dans lequel la première icône graphique est une flèche et les informations de texte comprennent l'expression « en haut » ou « en bas ».

12. Procédé selon la revendication 8, dans lequel l'icône graphique est modifiée par l'icône de voix en remplaçant l'icône graphique par l'icône de voix ou en ajoutant l'icône de voix à l'icône graphique.

13. Procédé selon la revendication 8, comprenant en outre le fait de détecter que l'utilisateur a énoncé l'expression associée à l'icône de voix et d'exécuter la fonctionnalité associée à l'icône de voix et/ou le fait de détecter que l'utilisateur a sélectionné l'une des icônes graphiques sur un affichage à écran tactile et d'exécuter la fonctionnalité associée à l'icône graphique sélectionnée.
